# EUROPÄISCHE PATENTSCHRIFT

(11) **EP 1 248 541 B1**
(45) Veröffentlichungstag und Bekanntmachung des Hinweises auf die Patenterteilung: **29.09.2010**
(21) Anmeldenummer: 01272589.1
(22) Anmeldetag: 17.12.2001
(51) Int. Cl.: A46B 5/02, A46D 3/00

(54) **VERFAHREN ZUR HERSTELLUNG EINER ZAHNBÜRSTE**
METHOD FOR PRODUCING A TOOTHBRUSH
PROCEDE DE FABRICATION D'UNE BROSSE A DENTS

(30) Priorität: 28.12.2000 DE 10065517
(43) Veröffentlichungstag der Anmeldung: 16.10.2002
(60) Teilanmeldung: 09007279.4
(73) Patentinhaber: Trisa Holding AG, 6234 Triengen (CH)
(72) Erfinder: STRÄHLER, Reto, CH-6043 Adligenswil (CH)
(74) Vertreter: Schaad, Balass, Menzl & Partner AG
(86) Internationale Anmeldenummer: PCT/CH2001/000720
(87) Internationale Veröffentlichungsnummer: WO 2002/052982

(56) Entgegenhaltungen:
- EP-A- 0 678 368
- EP-A- 0 893 225
- WO-A-99/01055
- DE-U- 9 402 418

## Beschreibung

Die Erfindung betrifft ein Verfahren zur Herstellung einer Zahnbürste gemäss dem Oberbegriff des Anspruches 1 und eine Spritzgussform gemäss Anspruch 7.

Aus der WO-A-94/05183 ist ein Verfahren zur Herstellung einer aus zwei verschiedenen Materialkomponeneten bestehenden Zahnbürste bekannt, bei dem in einem ersten Schritt der Grundkörper der Zahnbürste aus einer ersten Materialkomponente gespritzt wird, wozu eine erste Kavität vorgesehen ist. Danach wird in einer zweiten Kavität an verschiedenen Stellen des Grundkörpers eine weitere Materialkomponente, beispielsweise ein elastisches und/oder rutschsicheres Material, angespritzt. Der Grundkörper weist sowohl in seinem borstentragenden Bereich als auch in seinem Handgriffbereich einen relativ schmalen Querschnitt auf.

Um die Griffigkeit von Zahnbürsten zu verbessern und eine bequeme Handhabung zu ermöglichen, ist es von Vorteil, die Zahnbürste in ihrem Handgriffbereich relativ massiv auszubilden, d.h. dem Handgriff einen relativ grossen Querschnitt zu erteilen. Eine derartige Handgriff-Ausbildung bringt jedoch herstellungstechnisch einige Nachteile mit sich. Nicht nur der Materialaufwand ist durch das grössere Handgriffvolumen grösser; durch die grössere Masse wird auch die Einspritz- und Kühlzeit massiv erhöht und dadurch der Spritzgiessprozess verlängert (höhere Standzeit). Zudem neigen solche Handgriffteile mit einem relativ grossen Querschnitt zu einer Lunkerbildung (d.h. Bildung von Lufteinschlüssen), die bei Handgriffen aus einem transparenten Material sichtbar sind und die ästhetische Wirkung der Zahnbürste beeinträchtigen.

Das Dokument WO 99/01055 offenbart eine Spritzgiessvorrichtung, insbesondere eine Mehrkomponenten Spritzgiessvorrichtung, um Zahnbürsten herzustellen. Die Vorrichtung weist mindestens zwei hintereinander angeordnete Stationen auf, wovon eine eine Spritzgiessstation ist. Die beiden Stationen sind durch eine Transportvorrichtung miteinander verbunden.

Der vorliegenden Erfindung liegt die Aufgabe zugrunde, ein Verfahren der eingangs genannten Art vorzuschlagen, das bei Herstellung einer Zahnbürste mit einem im Querschnitt grossen, massiven Handgriff kurze Spritzintervalle gewährleistet.

Diese Aufgabe wird erfindungsgemäss durch ein Verfahren mit den Merkmalen des Anspruches 1 gelöst. Weiter wird die Aufgabe mit einer Spritzgussform gemäss Anspruch 7 gelöst.

Die Erfindung wird im folgenden anhand der Zeichnung näher erläutert.

In der Zeichnung sind drei Varianten des erfindungsgemässes Verfahren dargestellt und im folgenden näher beschrieben.

Es zeigen rein schematisch:
- Fig. 1 bis 3: eine erste Verfahrensvariante in drei Schritten;
- Fig. 4: in Seitenansicht und teilweise im Schnitt eine Zahnbürste hergestellt nach den Verfahrensschritten gemäss Fig. 1 bis 3;
- Fig. 5: in Draufsicht einen Teil einer Spritz- gussform für die erste Verfahrensvari- ante;
- Fig. 6 und 7: eine zweite Verfahrensvariante in zwei Schritten;
- Fig. 8: in Seitenansicht und teilweise im Schnitt eine Zahnbürste hergestellt nach den Verfahrensschritten gemäss Fig.6 und 7;
- Fig. 9: in Draufsicht einen Teil einer Spritz- gussform für die zweite Verfahrensva- riante; und
- Fig. 10: in Draufsicht einen Teil einer Spritz- gussform für eine dritte Verfahrensva- riante.

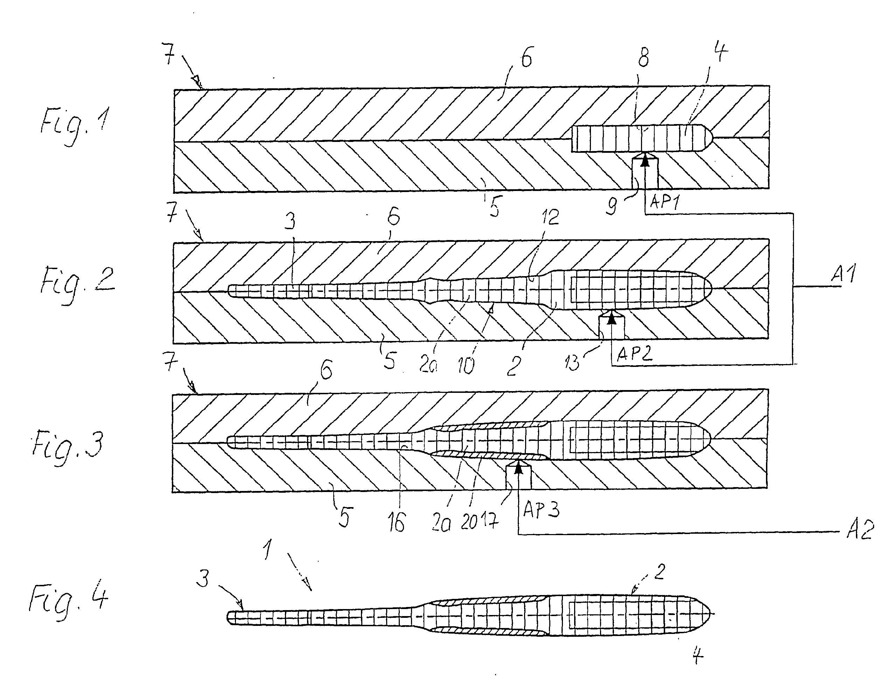

Zur Herstellung einer aus Fig. 4 ersichtlichen Zahnbürste 1, deren Handgriff 2 einen grösseren Querschnitt aufweist, als der zur Befestigung von Borsten bzw. Borstenbüscheln vorgesehene vordere Kopfteil 3, wird in einem ersten, in Fig. 1 dargestellten Schritt zuerst ein Innenteil 4 des Handgriffes 2 angefertigt. Zu diesem Zweck wird eine erste Portion der für den Handgriff 2 - und gegebenenfalls auch für den Kopfteil 3 - vorgesehenen ersten Materialkomponente in eine zwischen zwei Teilen 5, 6 einer Spritzgussform 7 gebildete erste Kavität 8 gespritzt. Der erste Anspritzpunkt für die von einem ersten Aggregat A1 zugeführte erste Materialkomponenete ist in Fig. 1 mit AP1 bezeichnet, der dafür vorgesehene Einspritzkanal bzw. Einspritzdüse mit 9.

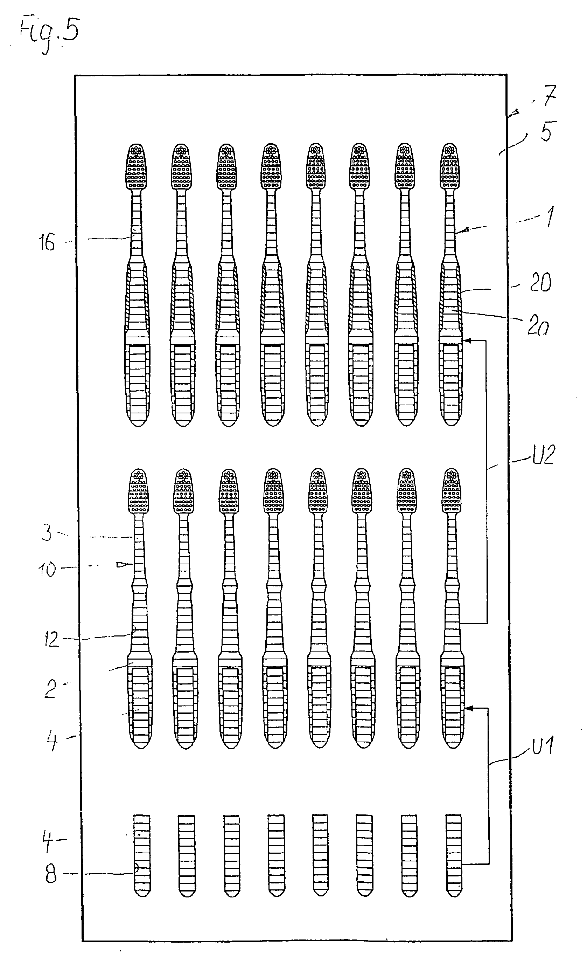

Wie aus Fig. 5 ersichtlich ist die Spritzgussform 7 für die Herstellung von mehreren, gegebenenfalls acht Zahnbürsten 1 vorgesehen. Die im ersten Schritt nach Fig. 1 gespritzten Innenteile 4 werden nach teilweisem Auskühlen und Aushärten - sobald genügende Eigenstabilität erreicht ist - mittels eines in der Zeichnung nicht dargestellten allgemein bekannten Übergabesystems, beispielsweise einem sogenannten internen, am Spritzwerkzeug angeordneten Handlingsystem, einem externen rotativen oder linearen Handlingsystem oder Roboter, jeweils in eine zweite, aus Fig. 2 ersichtliche Kavität 12 umgelegt. Diese erste Umlegung ist in Fig. 5 mit einem Pfeil U1 symbolisch angedeutet.

Der Innenteil 4 kann in radialer Richtung vorstehende Abstütznoppen aufweisen - in der Fig. 1 nicht gezeigt - mittels welchen das Innenteil 4 sich an der Wand der zweiten Kavität 12 abstützt, um dort zentrisch gehalten zu sein.

In einem zweiten, in Fig. 2 dargestellten Schritt wird eine zweite, gegebenenfalls restliche Portion der ersten Materialkomponenete in die zweite Kavität 12 über einen Einspritzkanal bzw. eine Einspritzdüse 13 eingespritzt. Der zweite Anspritzpunkt AP2 für die erste Kunststoffkomponenete ist gegenüber dem ersten Anspritzpunkt AP1 - in Längsrichtung der herzustellenden Zahnbürste gesehen - versetzt. Die zweite Portion der ersten Materialkomponente kommt in einen direkten Kontakt mit der ersten Portion; beim dargestellten Ausführungsbeispiel wird der Innenteil 4 umspritzt, der Handgriff 2 erhält in seinem hinteren Bereich die gewünschte, massive Form, und es entsteht auch der im Querschnitt schmalere vordere Kopfteil 3. Somit wird ein Grundkörper der Zahnbürste 1 gebildet, der aus der ersten Materialkomponenete besteht, und in Fig. 2 und 5 mit 10 bezeichnet ist. Für die Einspritzung beider Portionen der ersten Materialkomponenete wird vorzugsweise nur ein Aggregat A1 verwendet, wie in Fig. 1 und 2 angedeutet. Allerdings könnten die beiden Portionen des gleichen Materials auch aus zwei verschiedenen Aggregaten eingespritzt werden, und beispielsweise unterschiedliche Farben aufweisen.

Bei der Verfahrensvariante nach Fig. 1 bis 5 wird schliesslich in einem dritten Schritt der Handgriff 2 in seinem vorderen Bereich zusätzlich mit einer weiteren Materialkomponenete, beispielsweise einem im Vergleich zu der ersten Materialkomponenete elastisch nachgiebigeren Material, z.B. einem thermoplastischen Elastomer (TPE), umspritzt. Zu diesem Zweck wird der aus der ersten Materialkomponenete bestehende Grundkörper 10 nach dem Auskühlen bzw. Aushärten der zweiten Portion in eine dritte Kavität 16 der Spritzgussform 7 umgelegt, wobei wiederum die in Fig. 5 mit Pfeil U2 angedeutete zweite Umlegung aller acht Grundkörper 10 mittels eines nicht dargestellten Saugwerkzeuges erfolgt.

Gemäss Fig. 3 wird in die dritte Kavität 16 von einem weiteren Aggregat A2 über einen Einspritzkanal bzw. eine Einspritzdüse 17 die zweite Materialkomponenete in einem dritten Anspritzpunkt AP3 eingespritzt, wobei ein vorderer Teil 2a (Fig. 2 und 3) des Handgriffes 2 umspritzt und somit eine Art Mantel über einen Teil der Handgrifflänge gebildet wird. Ein solcher Griffteil 20 kann beispielsweise zur weiteren Verbesserung der Griffigkeit der Zahnbürste 1 beitragen. Selbstverständlich ist es möglich, weitere Materialkomponenten in weiteren Kavitäten hinzuzufügen.

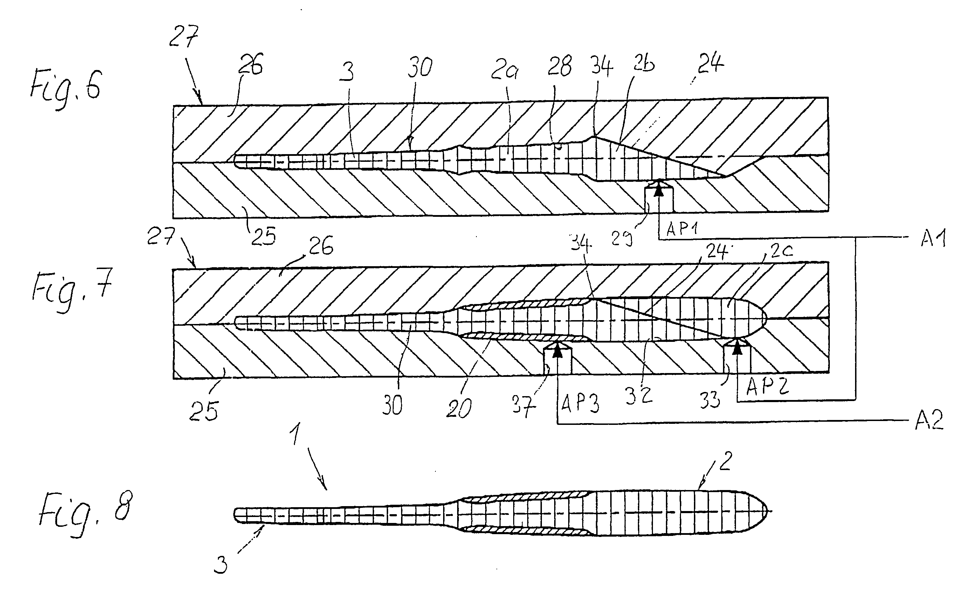

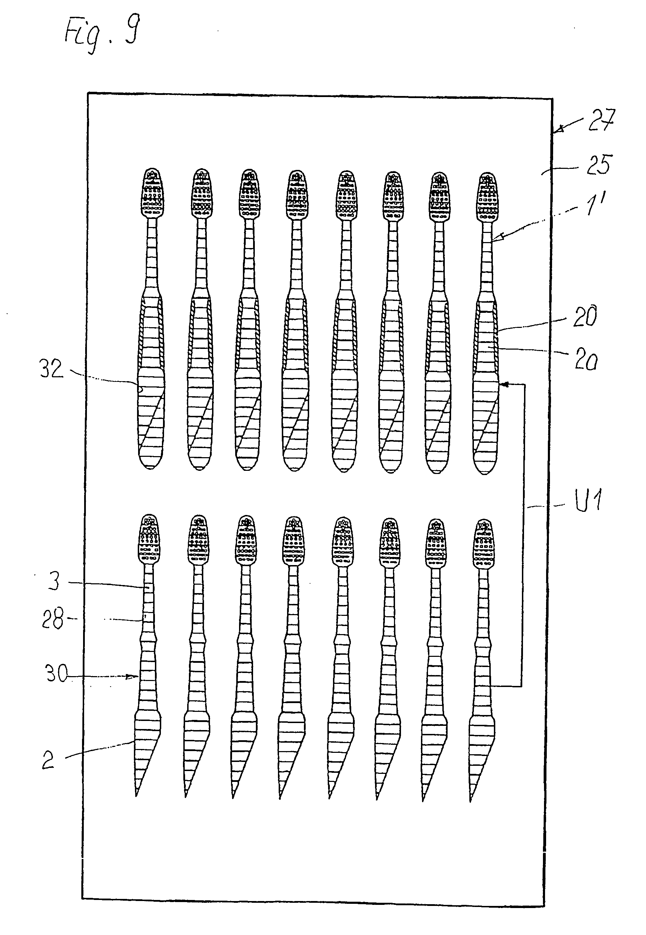

In Fig. 6, 7 und 9 ist eine weitere Verfahrensvariante zur Herstellung einer aus Fig. 8 ersichtlichen Zahnbürste 1' dargestellt, die wiederum einen vorderen Kopfteil 3 und einen diesem gegenüber im Querschnitt grösseren Handgriff 2 aufweist. Bei dieser Variante wird gemäss Fig. 6 in einem ersten Schritt der Kopfteil 3, ein vorderer Teil 2a des Handgriffes 2 sowie ein Teil 2b des im Querschnitt vergrösserten, hinteren Handgriffteils aus einer ersten Materialkomponenete gespritzt, die zusammen einen Grundkörper 30 der Zahnbürste 1' bilden. Die dafür vorgesehene, zwischen zwei Teilen 25, 26 einer Spritzgussform 27 gebildete erste Kavität ist in Fig. 6 mit 28 bezeichnet. Diese erste Kavität 28 ist so ausgebildet, dass der Teil 2b des Handgriffes 2 eine zur Längsrichtung der herzustellenden Zahnbürste 1' schräg verlaufende, obere Anspritzfläche 24 erhält; selbstverständlich könnte die Anspritzfläche 24 in eine andere Richtung verlaufen. In einem Anspritzpunkt AP1 wird über einen Einspritzkanal bzw. Einspritzdüse 29 eine erste Portion der ersten Materialkomponenete aus einem ersten Aggregat A1 in die erste Kavität 28 gespritzt. Wie aus Fig. 9 ersichtlich werden wiederum mehrere, gegebenenfalls acht Grundkörper 30 in einer Spritzgussform 27 hergestellt und nach teilweisem Auskühlen bzw. Aushärten mittels eines nicht dargestellten Übergabesystems in eine zweite, in Fig. 2 dargestellte Kavität 32 umgelegt. Diese Umlegung ist in Fig. 9 mit einem Pfeil U1 angedeutet.

In einem zweiten, in Fig. 7 dargestellten Schritt wird in die zweite Kavität 32 in einem hinteren zweiten Anspritzpunkt AP2, der hinter der Anspritzfläche 24 des sich in der Kavität 32 befindenden Grundkörpers 30 liegt, über einen Einspritzkanal bzw. eine Einspritzdüse 33 die zweite, restliche Portion der ersten Materialkomponenete eingespritzt - vorzugsweise aus dem gleichen Aggregat A1 wie die erste Portion. Auch hier könnte allerdings ein zusätzliches Aggregat für die zweite Portion zur Verfügung stehen. Durch die zweite, an die Anspritzfläche 24 des ausgekühlten Handgriffteiles 2b aufgespritzte Portion der ersten Materialkomponenete wird der restliche Teil 2c (Fig. 7) des Handgriffes 2 gebildet. Bei dieser Variante ist der Grundkörper 30 so ausgebildet, dass der für die Einspritzung dieser zweiten Portion (bzw. zur Bildung des restlichen Handgriff-Teiles 2c) vorgesehene Raum der zweiten Kavität 32 durch eine Umfangsfläche 34 des eingelegten Grundkörpers 30, die sich am Übergang zwischen dem vorderen Teil 2a und dem mit der Anspritzfläche 24 versehenen Teil 2b des Handgriffes 2 befindet, von einem für die Einspritzung einer zweiten, den vorderen Handgriffteil 2a umgebenden zweiten Materialkomponente vorgesehenen Raum der zweiten Kavität 32 getrennt ist. Somit kann gleichzeitig mit der Einspritzung der zweiten, restlichen Portion der ersten Materialkomponenete auch die Einspritzung der zweiten Materialkomponenete stattfinden, und zwar von einem weiteren Aggregat A2, in einem dritten Anspritzpunkt AP3, über einen in die zweite Kavität 32 mündenden Einspritzkanal (bzw. Eispritzdüse) 37. Auch hier wird dabei der Handgriff 2 zur Verbesserung der Griffigkeit mit dem beispielsweise aus einer elastisch nachgiebigeren Materialkomponente bestehenden Griffteil 20 ausgestattet. Falls notwendig, könnte die Einspritzung der ersten und zweiten Materialkomponente sequentiell erfolgen.

Bei der zweiten Verfahrensvariante nach Fig. 6, 7 und 9 sind demnach (im Gegensatz zu der ersten Variante nach Fig. 1 bis 3 und 5) für jede Zahnbürste 1' nur zwei Kavitäten 28, 32 notwendig, und es bedarf nur einer einzigen Umlegung U1.

Sowohl bei der ersten als auch bei der zweiten Verfahrensvariante wird durch die Aufteilung des Spritzgiessens vom im Querschnitt verdickten Handgriff 2 in zwei Arbeitsgänge, d. h. durch Spritzgiessen des gleichen Materials in zwei Portionen, die Einspritz- und die Kühlzeit wesentlich verkürzt, d. h. es werden kürzere Spritzintervalle ermöglicht, und zusätzlich wird die Bildung von Lunkern vermindert. Der letztgenannte Vorteil ist besonders bei transparenten oder transluzenten Handgriffen von Bedeutung. Die Trennlinien bzw. bei transparentem Material die Trennflächen zwischen den in den einzelnen Portionen gespritzten Handgriffteilen sind kaum sichtbar. Selbstverständlich könnten diese Handgriffteile (und die dazu benötigte Kavitäten) in ihrer Form auch anders ausgestaltet sein, als bei den Ausführungsbeispielen nach Fig. 1 bis 5 und 6 bis 9 dargestellt und beschrieben. Es wäre auch durchaus möglich, den im Querschnitt verdickten Handgriff in mehr als zwei Portionen zu spritzen, und dabei für jede weitere Portion eine zusätzliche Kavität vorzusehen.

Anhand der Fig. 1 bis 5 und 6 bis 9 wurde jeweils die Herstellung einer Zweikomponenten-Zahnbürste 1 bzw. 1' beschrieben. Selbstverständlich könnte auch eine Einkomponenten-Zahnbürste, d.h aus einer einzigen Materialkomponente bestehende Zahnbürste erfindungsgemäss in zwei oder mehreren Portionen gespritzt werden.

Eine Zweikomponenten-Zahnbürste könnte auch durchaus anders ausgestaltet sein als in Fig. 4 oder 8 dargestellt. Beispielsweise könnte der Kopfteil 3 aus einer anderen Materialkomponente bestehen, als der Handgriff 2. In diesem Fall könnte die zur Herstellung des gegenüber dem Kopfteil 3 verdickten Handgriffes 2 vorgesehene Materialkomponente mit Vorteil in zwei etwa gleich grossen Portionen gespritzt werden.

Bei einer Mehrkomponenten-Zahnbürste können aber auch mehrere Materialkomponenten erfindungsgemäss in zwei oder mehrere Portionen, die sequentiell gespritzt werden, aufgeteilt werden. Pro Komponente, welche aufgeteilt wird, ist natürlich mit einer zusätzlichen Kavität pro Portion zu rechnen.

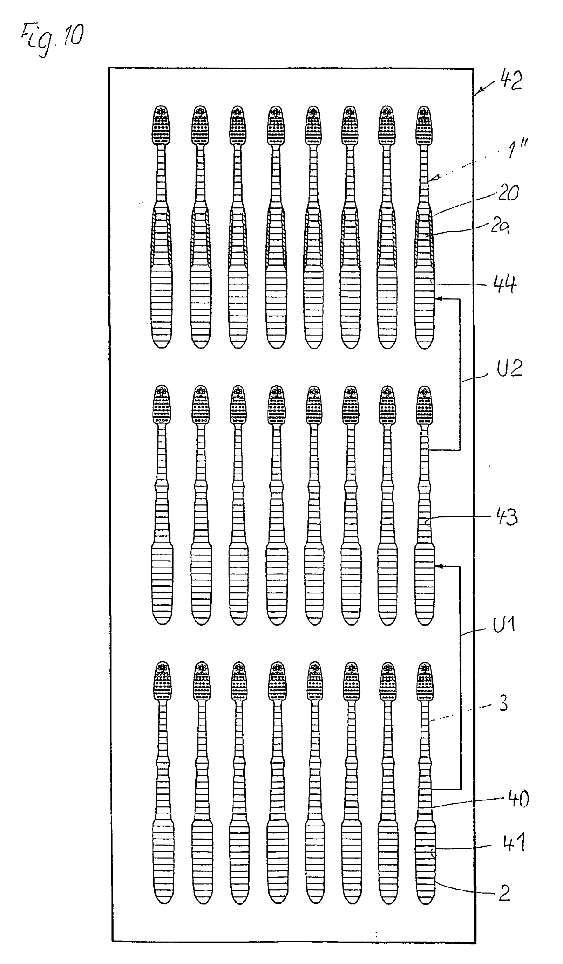

Eine erfindungsgemässe Verfahrensvariante zur Herstellung einer Zahnbürste, gegebenenfalls wiederum einer Zweikomponenten-Zahnbürste 1", ist in Fig. 10 angedeutet. In einem ersten Schritt wird ein Grundkörper 40 dieser Zahnbürste 1", der einen Kopfteil 3 sowie einen im Querschnitt vergrösserten Handgriff 2 aufweist, durch Spritzgiessen einer ersten Materialkomponente in eine erste Kavität 41 einer Spritzgussform 42 hergestellt, wobei bei dieser Variante die erste Materialkomponente vollständig in die erste Kavität 41 eingespritzt wird. Danach wird - sobald genügende Eigenstabilität nach teilweisem Auskühlen und Aushärten erreicht ist - der Grundkörper 40 mittels eines nicht dargestellten Saugwerkzeuges in eine Kühlkavität 43 umgelegt, was in Fig. 10 mit einem Pfeil U1 bezeichnet ist. In der Kühlkavität 43, die mit keinem Anspritzpunkt bzw. keinem Einspritzkanal ausgestattet ist, erfolgt eine weitere Auskühlung und Aushärtung des Grundkörpers 40, insbesondere dessen massiven Handgriffes 2, bis keine Gefahr einer Verformung besteht, wenn in einem weiteren Schritt der Grundkörper 40 in eine weitere Kavität 44 umgelegt wird (vgl. Pfeil U2 in Fig. 10), in die eine zweite, beispielsweise elastisch nachgiebigere Materialkomponente zur Bildung des Griffteiles 20 gespritzt wird. Auch diese Variante ermöglicht durch die Umlegung U1 des Grundkörpers 40 in die Kühlkavität 43 kurze Spritzintervalle.

Fig. 10 zeigt wiederum als Beispiel eine zur gleichzeitigen Herstellung von 8 Zahnbürsten vorgesehene Spritzgussform 42. Selbstverständlich sind bei allen Varianten auch andere Formgrössen mit einer anderen Anzahl von Kavitäten denkbar (z.B. mit je 16 oder je 24 Kavitäten pro Arbeitsschritt).

Als geeignete Materialkomponenten können die verschiedensten Kunststoffe eingesetzt werden, wobei es sich um mindestens teilweise transparente Materialien handeln kann, wie beispielsweise Styrol-Acryl-Nitril, Polyester, Polystyrol, Polyamide, Polycarbonate, Polymethylmethacrylat oder andere. Als opake Materialien können als Beispiel Polypropylen, thermoplastische Elastomere oder Polyethylen genannt werden.

## Patentansprüche

1. Verfahren zur Herstellung einer Zahnbürste aus mindestens einer Materialkomponente, umfassend das Spritzgiessen der Materialkomponente in eine Kavität (41) einer Spritzgussform (42), **dadurch gekennzeichnet, dass** die in einem ersten Schritt in eine erste Kavität (41) vollständig gespritzte erste Materialkomponente anschliessend, nach teilweisem Auskühlen und Aushärten, in eine, ohne Anspritzpunkt beziehungsweise Einspritzkanal ausgestattete Kühlkavität (43) zur weiteren Auskühlung sowie Aushärtung umgelegt und in einem weiteren Schritt in eine weitere Kavität (44) umgelegt wird, in die eine zweite Materialkomponente gespritzt wird.

2. Verfahren nach Anspruch 1, **dadurch gekennzeichnet, dass** im ersten Schritt aus der ersten Materialkomponente ein einen Kopfteil (3) sowie einen im Querschnitt vergrösserten Handgriff (2) aufweisender Grundkörper (40) der Zahnbürste (1'') hergestellt wird.

3. Verfahren nach Anspruch 2, **dadurch gekennzeichnet, dass** der Grundkörper (40) mittels eines Saugwerkzeugs in die Kühlkavität (43) umgelegt wird.

4. Verfahren nach einem der Ansprüche 1 bis 3, **dadurch gekennzeichnet, dass** die in die weitere Kavität (44) eingespritzte zweite Materialkomponente elastisch nachgiebiger ist als die erste Materialkomponente.

5. Verfahren nach Anspruch 4, **dadurch gekennzeichnet, dass** mit der zweiten Materialkomponente ein Griffteil (20) gebildet wird.

6. Verfahren nach einem der Ansprüche 1 bis 5, **dadurch gekennzeichnet, dass** in der Spritzgussform (42) mit einer Anzahl von Kavitäten (41, 43, 44) gleichzeitig eine entsprechende Anzahl von Zahnbürsten hergestellt wird.

7. Spritzgussform (42) zur Herstellung von Zahnbürsten nach dem Verfahren gemäss einem der Ansprüche 1 bis 6, beinhaltend wenigstens eine erste Kavität (41) zum Einspritzen der ersten Materialkomponente, wenigstens einer Kühlkavität (43), die mit keinem Anspritzpunkt beziehungsweise keinem Einspritzkanal ausgestattet ist, und eine weitere Kavität (44) zum Einspritzen der zweiten Materialkomponente.

## Claims

1. Method for producing a toothbrush from at least one material component, comprising injecting the material component into a cavity (41) of an injection mould (42), **characterized in that** the first material component, injected completely into a first cavity (41) in a first step, is then transferred, after partial cooling and hardening, into a cooling cavity (43), without injection point or injection channel, for further cooling and hardening, and, in a further step, is transferred into a further cavity (44) into which a second material component is injected.

2. Method according to Claim 1, **characterized in that,** in the first step, a main body (40) of the toothbrush (1'') is produced from the first material component, said main body (40) having a head part (3) and a handle (2) of increased cross section.

3. Method according to Claim 2, **characterized in that** the main body (40) is transferred into the cooling cavity (43) by means of a suction tool.

4. Method according to one of Claims 1 to 3, **characterized in that** the second material component injected into the further cavity (44) is more elastically resilient than the first material component.

5. Method according to Claim 4, **characterized in that** a grip part (20) is formed with the second material component.

6. Method according to one of Claims 1 to 5, **characterized in that** a number of toothbrushes are simultaneously produced that corresponds to the number of cavities (41, 43, 44) in the injection mould (42).

7. Injection mould (42) for producing toothbrushes by the method according to one of Claims 1 to 6, comprising at least one first cavity (41) for injection of the first material component, at least one cooling cavity (43), which has no injection point or injection channel, and a further cavity (44) for injection of the second material component.

## Revendications

1. Procédé de fabrication d'une brosse à dents constituée d'au moins un matériau constituant, comprenant le moulage par injection du matériau constituant dans une cavité (41) d'un moule de moulage par injection (42), **caractérisé en ce que** le premier matériau constituant complètement injecté dans une première étape dans une première cavité (41) est ensuite transféré après refroidissement et durcissement partiel dans une cavité de refroidissement (43) non pourvue d'un point d'injection ou d'un canal d'injection, en vue d'un refroidissement et d'un durcissement supplémentaires, et dans une étape supplémentaire, est transféré dans une cavité supplémentaire (44) dans laquelle un deuxième matériau constituant est injecté.

2. Procédé selon la revendication 1, **caractérisé en ce que** dans la première étape, on fabrique à partir du premier matériau constituant un corps de base (40) de la brosse à dents (1") présentant une partie de tête (3) ainsi qu'un manche (2) de section transversale agrandie.

3. Procédé selon la revendication 2, **caractérisé en ce que** le corps de base (40) est transféré au moyen d'un outil aspirant dans la cavité de refroidissement (43).

4. Procédé selon l'une quelconque des revendications 1 à 3, **caractérisé en ce que** le deuxième matériau constituant injecté dans la cavité supplémentaire (44) est plus flexible élastiquement que le premier matériau constituant.

5. Procédé selon la revendication 4, **caractérisé en ce qu'**une partie de préhension (20) est formée avec le deuxième matériau constituant.

6. Procédé selon l'une quelconque des revendications 1 à 5, **caractérisé en ce que** dans le moule de moulage par injection (42) comprenant une pluralité de cavités (41, 43, 44), on fabrique simultanément un nombre correspondant de brosses à dents.

7. Moule de moulage par injection (42) pour la fabrication de brosses à dents conformément au procédé selon l'une quelconque des revendications 1 à 6, contenant au moins une première cavité (41) pour injecter le premier matériau constituant, au moins une cavité de refroidissement (43), qui n'est munie d'aucun point d'injection ou canal d'injection, et une cavité supplémentaire (44) pour l'injection du deuxième matériau constituant.
